# FASCICULE DE BREVET EUROPEEN

(11) **EP 3 600 978 B1**
(45) Date de publication et mention de la délivrance du brevet: **15.12.2021**
(21) Numéro de dépôt: 18713242.8
(22) Date de dépôt: 27.03.2018
(51) Int. Cl.: B60S 1/38

(54) **EMBOUT D'EXTRÉMITÉ ET LAME RACLEUSE CONSTITUTIFS D'UN BALAI D'ESSUYAGE**
ENDSTÜCK UND WISCHERGUMMI EINES WISCHBLATTS
END PIECE AND WIPER RUBBER OF A WIPER BLADE

(30) Priorité: 27.03.2017 FR 1752534
(43) Date de publication de la demande: 05.02.2020
(73) Titulaire: Valeo Systèmes d'Essuyage, 78322 Le Mesnil Saint Denis (FR)
(72) Inventeur: CARRARO, Philippe, 63500 Issoire (FR); BARRET, Guillaume, 63500 Issoire (FR); BOUSSET, Xavier, 63500 Issoire (FR); CHASSAING, Christophe, 63500 Issoire (FR)
(74) Mandataire: Valeo Visibility
(86) Numéro de dépôt international: PCT/EP2018/057830
(87) Numéro de publication internationale: WO 2018/178109

(56) Documents cités:
- EP-A1- 3 009 311
- DE-A1-102008 001 152
- FR-A1- 2 973 314
- US-A1- 2013 067 676

## Description

Le domaine de la présente invention est celui des systèmes d'essuyage destinés à équiper un véhicule automobile. Elle a pour objet un ensemble formé d'un embout d'extrémité et d'une lame racleuse qui sont constitutifs d'un balai d'essuyage.

Un système d'essuyage, couramment dénommé essuie-glaces, pour véhicule automobile est conçu pour retirer, par balayage, les liquides et salissures qui peuvent perturber la vision qu'un conducteur du véhicule automobile a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant au moins un support flexible qui maintient la lame racleuse sur toute sa longueur, autrement appelé « balai plat », le balai d'essuyage est rattaché à une partie terminale du bras d'entraînement par l'intermédiaire d'un dispositif de connexion qui comprend un connecteur monté solidaire du balai d'essuyage.

A chacune des extrémités longitudinales du balai d'essuyage dans sa variante « balai plat », la lame racleuse et le support flexible sont équipées d'un embout d'extrémité qui participe d'un maintien solidaire de la lame racleuse et du support flexible entre eux.

Un état de la technique est formé par le document US2010/0050362 dans lequel l'embout d'extrémité est apte à recevoir les extrémités longitudinales de deux éléments porteurs et l'extrémité longitudinale de la lame racleuse. A cet effet, l'embout d'extrémité comporte un premier logement et un deuxième logement, disposés dans un même premier plan, et aptes à recevoir chacun une extrémité longitudinale de l'un des éléments porteurs. L'embout d'extrémité comporte un troisième logement qui est apte à recevoir l'extrémité longitudinale de la lame racleuse, le troisième logement étant interposé entre le premier logement et le deuxième logement, le troisième logement communiquant avec le premier logement et le deuxième logement.

L'embout d'extrémité comporte également un couple de dents disposées dans un même deuxième plan. Une première dent est placée sous le premier logement et une deuxième dent est placée sous le deuxième logement. Les dents forment un moyen de retenu de l'embout d'extrémité, à partir d'une pénétration des dents à l'intérieur de la lame racleuse pour assurer le maintien en position de la lame racleuse et de l'embout d'extrémité.

Un tel moyen de retenu est particulièrement agressif à l'égard de la lame racleuse et tend à provoquer des déchirures de celle-ci, et finalement une détérioration du balai d'essuyage.

Par ailleurs, la technologie à deux éléments porteurs employée par le balai d'essuyage divulgué dans ce document n'est absolument pas adaptée pour le cas où l'utilisateur souhaiterait remplacer seulement la partie usée de son balai d'essuyage, c'est-à-dire la lame racleuse. En effet, les embouts d'extrémité participent au maintien mécanique des deux éléments porteurs et leur démontage, en vue de remplacer la lame racleuse, implique un écartement des éléments porteurs incompatible avec un remontage ergonomique d'une lame racleuse neuve. US-A-2013/067676 montre le préambule de la revendication 1.

Un but de la présente invention est de proposer un ensemble formé d'un embout d'extrémité et d'une lame racleuse, l'embout d'extrémité étant pourvu de moyen d'accrochage à la lame racleuse, un tel ensemble permettant un remplacement aisé de la lame racleuse lorsque celle-ci est usée, sans pour autant séparer le balai d'essuyage en une multiplicité de pièces.

Un objet de la présente invention est ainsi un ensemble formé d'un embout d'extrémité et d'une lame racleuse constitutifs d'un balai d'essuyage, la lame racleuse comprenant au moins un talon et une zone de frottement, la zone de frottement étant apte à venir en contact d'une surface à essuyer, l'embout d'extrémité comprenant un premier logement qui est configuré pour recevoir une première extrémité d'un support flexible du balai d'essuyage et un deuxième logement dans lequel s'étend le talon de la lame racleuse, les deux logements étant superposés dans un plan passant par le talon et par la zone de frottement, l'embout d'extrémité comprenant un moyen d'accrochage à la lame racleuse venu de matière avec l'embout d'extrémité.

La matière constitutive de l'embout d'extrémité est exploitée pour générer une liaison par adhérence avec la lame racleuse, notamment en une portion de la lame racleuse située entre le talon et la zone de frottement de la lame racleuse. Le moyen d'accrochage vient donc pincer la lame d'essuyage de manière à garantir une liaison mécanique par frottement entre l'embout d'extrémité et la lame racleuse.

La zone de frottement forme une bande d'extension longitudinale qui vient en contact de la surface à essuyer, cette dernière pouvant être un pare-brise, une lunette arrière ou un projecteur d'un véhicule.

Les logements sont des évidements ménagés dans l'embout d'extrémité qui présentent une section rectangulaire, ou globalement rectangulaire.

Bien que convenant pour un balai d'essuyage de première monte sur un véhicule automobile, l'ensemble selon l'invention forme un article vendu dans les réseaux de commercialisation de pièces après-vente pour véhicule automobile.

Selon l'invention,
- le moyen d'accrochage comprend un canal ménagé à travers une paroi périphérique de l'embout d'extrémité, le canal comprenant une première partie d'une première largeur et une deuxième partie d'une deuxième largeur, la deuxième largeur étant supérieure à la première largeur. Avantageusement, la deuxième partie est dans un prolongement de la première partie dans le plan évoqué plus haut, et par exemple immédiatement l'une dans le prolongement de l'autre, De plus, selon l'invention, seule la lame racleuse est déformable. En d'autres termes, l'embout d'extrémité n'est quant à lui pas déformable. Enfin, selon l'invention,
- la lame racleuse comprend un corps intermédiaire disposé entre le talon et la zone de frottement, ce corps intermédiaire présente une épaisseur supérieure à la première largeur de la première partie du canal et inférieure à la deuxième largeur de la première partie du canal, mesurée avant insertion dans le canal. La lame racleuse est réalisée en un matériau déformable, par exemple en élastomère ou en caoutchouc. Elle est donc susceptible de se comprimer pour entrer dans la première partie du canal.

L'ensemble selon l'invention comprend avantageusement l'une quelconque au moins des caractéristiques suivantes, prise seule ou en combinaison :
- le canal comprend une troisième partie d'une troisième largeur qui est supérieure à la première largeur. Cette troisième partie est une zone d'insertion de la lame racleuse qui permet le montage de la lame racleuse sur l'embout d'extrémité. Avantageusement, la troisième partie est dans un prolongement de la première partie dans le plan évoqué plus haut, et par exemple immédiatement l'une dans le prolongement de l'autre. On notera que la première partie est interposée entre la deuxième partie et la troisième partie du canal,
- L'embout d'extrémité comprend un premier col d'une quatrième largeur qui est interposé entre la première partie et la deuxième partie, la quatrième largeur étant inférieure à la première largeur. Un tel col forme ainsi une restriction de la largeur de la première partie du canal dans lequel la lame racleuse s'étend,
- le premier col est équipé d'au moins une dent. Avantageusement, le col comprend un unique couple de dents, c'est-à-dire deux dents situées l'une en face de l'autre. Ces dents sont issues de matière avec l'embout d'extrémité et sont formées par une épaisseur de la paroi périphérique qui délimite l'embout d'extrémité. Chacune de ces dents s'étend vers la deuxième partie du canal,
- le premier logement est séparé du deuxième logement par une paroi commune aux deux logements. Une telle paroi commune peut être pleine et ininterrompue entre les deux logements. Selon une alternative, cette paroi commune peut comprendre un passage entre les deux logements, les logements demeurant distincts tant qu'au moins une partie de paroi commune existe entre le premier logement et le deuxième logement,
- la troisième largeur est décroissante entre une première ouverture du canal et un deuxième col qui est interposé entre la première partie et la troisième partie du canal,
- la troisième largeur décroit de manière continue ou par paliers,
- une largeur d'un corps intermédiaire de la lame racleuse, mesurée hors de la première partie du canal, est supérieure à la première largeur de la première partie du canal,
- l'embout d'extrémité est réalisé en un matériau plus rigide que le matériau dans lequel est réalisée la lame racleuse,
- la paroi périphérique de l'embout d'extrémité dans laquelle est ménagé le canal présente une surface plane sur une dimension au moins équivalente à une largeur du premier logement de l'embout d'extrémité destiné à recevoir la première extrémité du support flexible.

L'embout d'extrémité décrit dans la présente invention est monolithique, c'est-à-dire réalisé d'une seule pièce et d'une seule matière.

L'invention porte aussi sur un balai d'essuyage comprenant un tel ensemble et un support flexible dont la première extrémité est logée à l'intérieur du premier logement. Un tel balai d'essuyage peut notamment comprendre aussi un ou plusieurs déflecteurs d'air, un connecteur et éventuellement un adaptateur permettant d'associer le balai d'essuyage à un type de bras d'entraînement particulier.

L'invention porte aussi sur un système d'essuyage comprenant un bras d'entraînement pourvu d'un dispositif de connexion avec un tel balai d'essuyage, le dispositif de connexion pouvant comprendre un adaptateur tel qu'exposé ci-dessus.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'un système d'essuyage selon l'invention,
- la figure 2 est une vue en perspective de côté d'un embout d'extrémité constitutif du système d'essuyage représenté sur la figure 1,
- la figure 3 est une vue en coupe transversale de l'embout d'extrémité illustré sur la figure 2,
- la figure 4 est une vue en coupe transversale de l'embout d'extrémité illustré sur les figures 2 et 3 associé à une lame racleuse et à un support flexible,
- la figure 5 est une vue en perspective de dessous de l'embout d'extrémité illustré sur les figures 2 à 4,
- la figure 6 est une vue de dessous de l'embout d'extrémité illustré sur les figures 2 à 5,
- la figure 7 est une vue en perspective de dessous de l'embout d'extrémité illustré sur les figures 2 à 6 et de la lame racleuse préalablement à leur assemblage,
- la figure 8 est une vue en perspective de dessous de l'embout d'extrémité et de la lame racleuse illustrés sur la figure 7 assemblés entre eux.

Il faut tout d'abord noter que les figures exposent l'invention de manière détaillée pour mettre en œuvre l'invention, lesdites figures pouvant bien entendu servir à mieux définir l'invention le cas échéant.

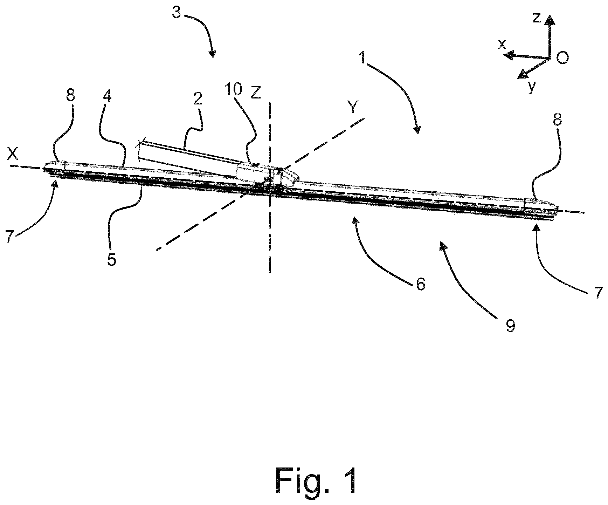

Sur les figures, les dénominations longitudinale, transversale, verticale, latérale, gauche, droite, supérieure, inférieure, se réfèrent à l'orientation, dans un repère orthonormé Oxyz, d'un balai d'essuyage 1 illustré sur la figure 1. Dans ce repère, l'axe Ox représente la direction longitudinale, l'axe Oy représente la direction transversale, et l'axe Oz représente la direction verticale de l'objet considéré, notamment le balai d'essuyage. Dans ce repère, un plan longitudinal est parallèle au plan Oxz, un plan transversal est parallèle au plan Oyz et un plan vertical est parallèle à un plan Oxy.

Sur la figure 1, un balai d'essuyage 1 de la présente invention s'étend selon un axe longitudinal X, parallèle à l'axe Ox. Les dénominations gauche et droite s'apprécient par rapport à une position le long d'un axe transversal Y, parallèle à l'axe Oy, de part et d'autre de l'axe longitudinal X. Un axe vertical Z symbolise une direction verticale, parallèle à celle de l'axe Oz, qui est perpendiculaire aux directions longitudinale et transversale décrites ci-dessus. Les dénominations supérieure ou inférieure se rapportent à des orientations le long de l'axe vertical Z, la dénomination inférieure contenant le plan du pare-brise. Pour les directions longitudinales, les dénominations extérieure ou intérieure s'apprécient par rapport à un point de pivotement du balai d'essuyage 1 sur un bras d'entraînement 2 du balai d'essuyage 1, la dénomination intérieure correspondant à la partie où le bras d'entraînement 2 et un demi-balai s'étendent, la dénomination extérieure correspondant à la partie où l'autre demi-balai s'étend.

Un véhicule automobile est couramment équipé d'un système d'essuyage 3 pour évacuer une eau et/ou des salissures présentes sur une surface vitrée, notamment une lunette arrière ou un pare-brise avant de véhicule automobile. Le système d'essuyage 3 comprend le bras d'entraînement 2 qui est apte à effectuer un mouvement de va-et-vient angulaire le long et au-dessus de la surface vitrée.

Le système d'essuyage 3 comprend aussi le balai d'essuyage 1 qui s'étend selon l'axe longitudinal X. Le balai d'essuyage 1 comprend une lame racleuse 5 et au moins un déflecteur d'air 4. Le déflecteur d'air 4 est prévu pour transformer une pression appliquée par un flux d'air circulant le long de la surface vitrée en une force d'appui du balai d'essuyage 1 contre la surface vitrée du véhicule automobile.

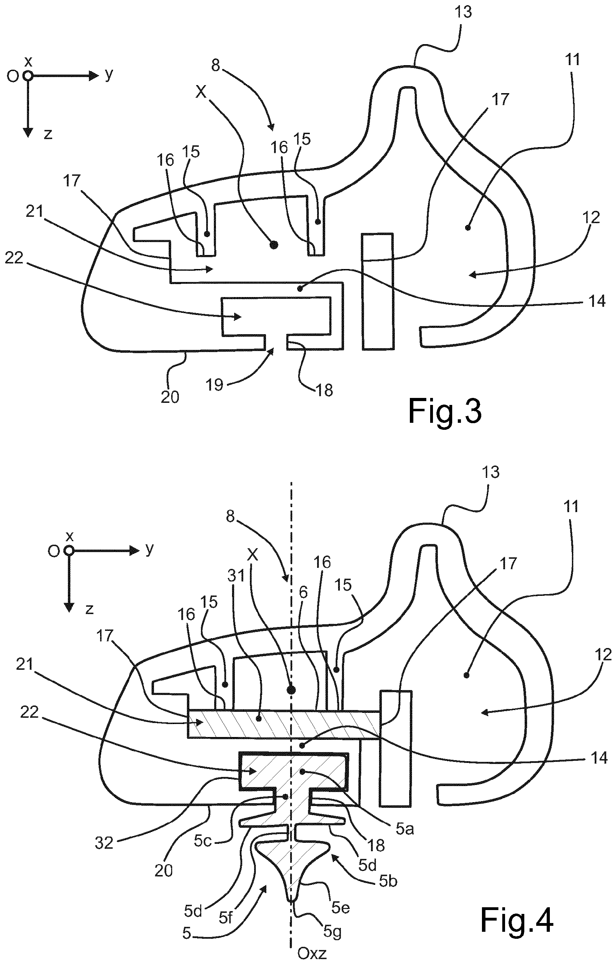

La lame racleuse 5 est la pièce du balai d'essuyage 1 en contact direct avec la surface vitrée pour évacuer l'eau et/ou les salissures présentes sur cette dernière. La lame racleuse 5 est par exemple une lame souple réalisée en un matériau élastique, tel qu'un polymère, caoutchouc notamment. Le balai d'essuyage 1 comprend aussi un support flexible 6, plus particulièrement visible sur la figure 4, qui confère au balai d'essuyage 1 une certaine déformation dans le plan Oxz et une conformation cintrée pour une application optimisée du balai d'essuyage 1 contre la surface vitrée. Le balai d'essuyage 1 comprend également à chacune de ses extrémités longitudinales 7 un embout d'extrémité 8. Chaque embout d'extrémité 8 est prévu pour maintenir ensemble la lame racleuse 5 et le support flexible 6, un tel embout d'extrémité 8 pouvant par exemple couvrir une partie terminale du déflecteur d'air 4. Le support flexible 6 s'étend donc d'une première extrémité longitudinale 7 du balai d'essuyage 1 à une deuxième extrémité longitudinale 7 du même balai.

Selon l'exemple de réalisation, Le support flexible 6 est par exemple une bande métallique, autrement appelé vertèbre. Une telle vertèbre est avantageusement unique, au moins vue dans le plan Oxy.

Le déflecteur d'air 4, la lame racleuse 5 et le support flexible 6 forment une structure semi-rigide 9 qui est portée par un dispositif de connexion 10, interposé entre une partie terminale du bras d'entraînement 2 et la structure semi-rigide 9. Un tel dispositif de connexion 10 comprend par exemple un connecteur solidaire au moins de manière isostatique de la structure semi-rigide 9, et un adaptateur relié par une liaison pivot au connecteur.

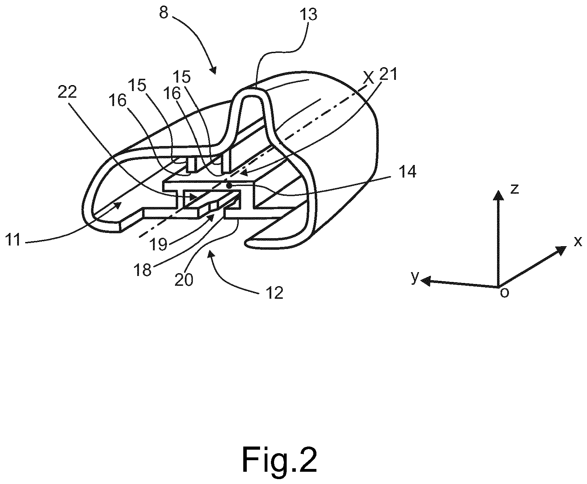

Sur les figures 2 à 4, l'embout d'extrémité 8 est globalement agencé en une coque qui délimite un volume interne 11 accessible par l'intermédiaire d'un passage 12. Le passage 12 s'étend préférentiellement à l'intérieur d'un plan transversal Oyz. L'embout d'extrémité 8 comprend une arête supérieure 13 qui est prévue pour loger une extrémité longitudinale d'un bord d'attaque du déflecteur d'air 4. L'arête supérieure 13 s'étend globalement dans un plan vertical Oxz.

Selon l'invention, un ensemble est formé de l'embout d'extrémité 8 et de la lame racleuse 5, accrochés l'un à l'autre par un moyen d'accrochage 19 qui est venu de matière avec l'embout d'extrémité 8. On comprend ici que le moyen d'accrochage est une ou plusieurs formes de l'embout d'extrémité 8 qui sont en mesure de réaliser une liaison au moins isostatique entre l'embout d'extrémité 8 et la lame racleuse 5. Selon un exemple, un tel moyen d'accrochage 19 coince la lame racleuse 5.

L'embout d'extrémité 8 comporte au moins deux logements distincts 21, 22, dont un premier logement 21 prévu pour recevoir une extrémité longitudinale 31 du support flexible 6 et dont un deuxième logement 22 prévu pour recevoir partiellement une extrémité longitudinale 32 de la lame racleuse 5. Le premier logement 21 et le deuxième logement 22 sont étanches l'un avec l'autre et ne communiquent pas entre eux. Le premier logement 21 et le deuxième logement 22 sont ménagés l'un et l'autre dans un plan horizontal Oxy, en s'étendant selon l'axe longitudinal X.

Le premier logement 21 et le deuxième logement 22 sont superposés l'un à l'autre, le premier logement 21 étant placé au-dessus du deuxième logement 22, en position d'utilisation du balai d'essuyage 1 sur le véhicule automobile. Dans cette configuration, le premier logement 21 est un logement inférieur et le deuxième logement 22 est un logement supérieur. Le premier logement 21 et le deuxième logement 22 sont débouchant sur l'extérieur de l'embout d'extrémité 8 par l'intermédiaire du passage 12. Un tel passage 12 donne accès au premier logement 21 pour l'extrémité longitudinale 31 du support flexible 6 et au deuxième logement 22 pour l'extrémité longitudinale 32 de la lame racleuse 5.

En se reportant plus particulièrement sur la figure 4, la lame racleuse 5 comprend un talon 5a et une tête 5b reliés l'un à l'autre par un corps intermédiaire 5c. Le deuxième logement 22 est plus particulièrement destiné à recevoir le talon 5a de la lame racleuse 5 de manière à laisser émerger la tête 5b de la lame racleuse 5 hors de l'embout d'extrémité 8. Le talon 5a présente par exemple une section transversale complémentaire à la section transversale du deuxième logement 22. La section transversale du talon 5a est ici globalement rectangulaire pour faciliter une insertion du talon 5a à l'intérieur du deuxième logement 22, qui est également de section transversale rectangulaire.

La tête 5b comprend par exemple des bras latéraux 5d qui sont portés par le corps intermédiaire 5c et une pointe effilée 5e reliée aux bras latéraux 5d par l'intermédiaire d'une charnière 5f. La pointe effilée 5e de la lame racleuse 5 est prévue pour circuler le long de la surface vitrée, une zone de frottement 5g de la pointe effilée 5e venant au contact de la surface vitrée lors de la mise en place du balai d'essuyage 1 sur la surface vitrée. La zone de frottement 5g d'un côté, et le talon 5a de l'autre, forment chacun une extrémité de la lame racleuse 5 vue dans un plan Oxz. Ce plan qui passe par la zone de frottement 5g et par le talon 5a forme un plan longitudinal médian qui partage symétriquement la lame racleuse 5, tel que cela est visible sur la figure 4.

Le premier logement 21 et le deuxième logement 22 sont préférentiellement délimités par au moins une paroi commune 14 constitutive de l'embout d'extrémité 8. Cette paroi est commune en ce sens qu'elle délimite les deux logements 21 et 22. La paroi commune 14 s'étend à l'intérieur d'un plan horizontal Oxy entre le premier logement 21 et le deuxième logement 22.

Le premier logement 21 est aussi délimité par au moins un montant 15, et préférentiellement deux montants 15, comme illustré sur les figures 2 à 4. Les montants 15 sont parallèles entre eux et parallèles à un plan Oxz. Les montants 15 comprennent chacun une extrémité inférieure qui forme une rampe de guidage 16 ménagée parallèlement à un plan Oxy. Autrement dit, le premier logement 21 est bordé par les rampes de guidage 16 et par la paroi commune 14, de telle sorte que le support flexible 6 est inséré à l'intérieur du premier logement 21 en coulissant entre la paroi commune 14 et les rampes de guidage 16, et contre celles-ci. Des bords latéraux 17 de l'embout d'extrémité 8 permettent un guidage du support flexible 6 à l'intérieur du plan Oxy. Paroi commune 14, montants 15 et bords latéraux 17 délimitent périphériquement au moins une partie du premier logement 21. Cette périphérie est néanmoins ouverte, par exemple entre les deux montants 15, ou entre chaque montant 15 et chaque bord latéral 17.

Le deuxième logement 22 est équipé d'un canal 18. Ce canal 18 forme un exemple de réalisation du moyen d'accrochage 19 que comprend l'embout d'extrémité 8 pour accrocher et retenir la lame racleuse 5.

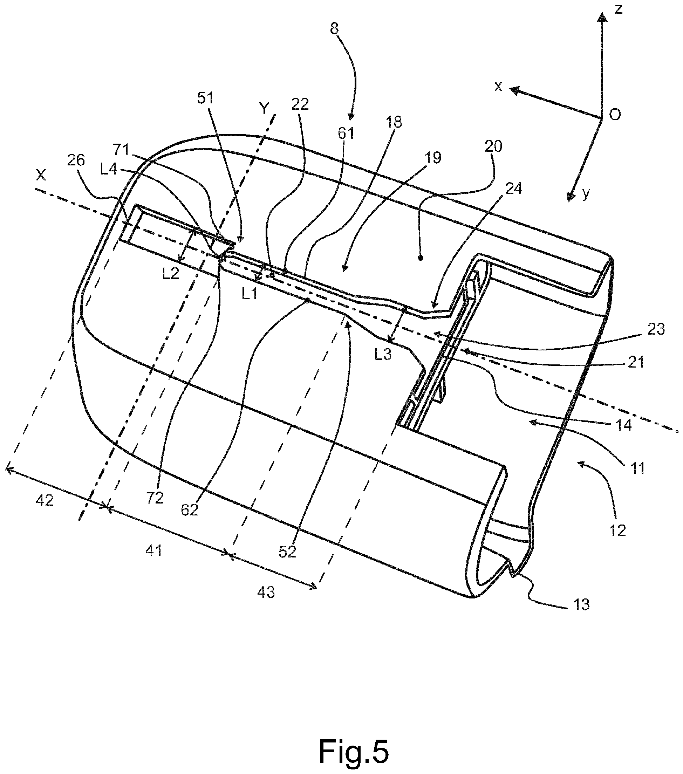

Le canal 8 débouche vers l'extérieur de l'embout d'extrémité 8 et il est ménagé en s'étendant parallèlement à l'axe longitudinal X. Le canal 18 permet une communication entre le deuxième logement 22 et l'extérieur de l'embout d'extrémité 8. Ce canal 18 prend la forme d'une fente ménagée à travers une paroi inférieure 20 de l'embout d'extrémité 8. Tel que notamment illustré sur la figure 5, cette paroi inférieure 20 de l'embout d'extrémité 8 est plane. Plus précisément, cette paroi inférieure 20 de l'embout d'extrémité 8 est plane sur une dimension au moins équivalente à une largeur du premier logement 21 destiné à recevoir la première extrémité longitudinale 31 du support flexible 6. Cette largeur du premier logement 21 est mesurée le long de l'axe transversal Y, entre les bords latéraux 17.

Le canal 18 reçoit au moins partiellement le corps intermédiaire 5c de la lame racleuse 5, tandis que le deuxième logement 22 reçoit le talon 5a de la lame racleuse, la tête 5b étant maintenue hors de l'embout d'extrémité 8.

De part et d'autre du canal 18, la paroi inférieure 20 qui délimite le deuxième logement 22 forme deux crochets qui attrapent le talon 5a de la lame racleuse 5 et le retiennent dans le deuxième logement 22.

Dans un plan Oxy, le canal 18 est délimité par une ouverture 23 qui est ménagée à travers la paroi inférieure 20 et qui permet une communication entre le canal 18 et le passage 12. Cette ouverture 23 est celle par laquelle le corps intermédiaire 5c entre dans le moyen d'accrochage 19 quand la lame racleuse 5 est rendue solidaire de l'embout d'extrémité 8.

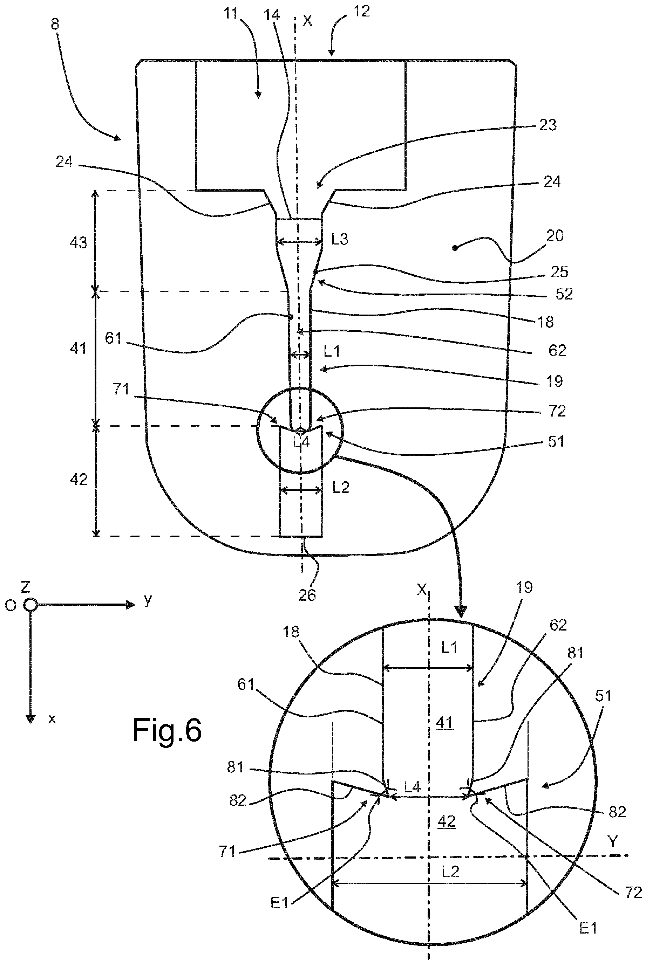

Sur les figures 5 et 6, le canal 18 comprend trois parties 41, 42, 43 dont une première partie 41 qui est interposée entre une deuxième partie 42 et une troisième partie 43, la troisième partie 43 étant bordée par la première ouverture 23. Autrement dit, depuis la première ouverture 23, le canal 18 comporte successivement et le long de l'axe longitudinal X la troisième partie 43, la première partie 41 et la deuxième partie 42, la première ouverture 23 étant longitudinalement opposée et placée en vis-à-vis d'une butée 26 qui délimite partiellement la deuxième partie 42. Cette butée 26 est formée par une paroi périphérique qui délimite l'embout d'extrémité 8 par rapport à son environnement extérieur.

Les parties 41, 42, 43 présentent des largeurs respectives L1, L2, L3 distinctes les unes des autres, chaque largeur L1, L2, L3 étant mesurée parallèlement à l'axe transversal Y entre deux bords longitudinaux 61, 62 qui sont transversalement opposés l'un à l'autre et en vis-à-vis l'un de l'autre. Les bords longitudinaux 61, 62 délimitent donc transversalement le canal 18. Plus particulièrement, la première largeur L1 est strictement inférieure à la deuxième largeur L2. Plus particulièrement encore, la première largeur L1 est strictement inférieure à la troisième largeur L3.

La première partie 41 et la deuxième partie 42 sont séparées l'une de l'autre par un premier col 51. Autrement dit, le premier col 51 est la zone du canal 18 où la largeur du canal 18 passe de la première largeur L1 à la deuxième largeur L2. Le premier col 51 présente une quatrième largeur L4 prise entre les deux bords longitudinaux 61, 62 et parallèlement à l'axe transversal Y qui est préférentiellement inférieure à la première largeur L1, de telle sorte que le premier col 51 forme une restriction de largeur interposée entre la première partie 41 et la deuxième partie 42.

Le premier col 51 est équipé d'un unique couple de dents 71, 72, une première dent 71 équipant un premier bord longitudinal 61 et une deuxième dent 72 équipant un deuxième bord longitudinal 62. Chaque dent 71, 72 est conformée en un harpon dont une extrémité est pointée vers la deuxième partie 42. Autrement dit, les dents 71, 72 sont entrantes et effilées depuis la première partie 41 vers la deuxième partie 42. Une largeur E1 de chaque dent 71, 72, mesurée parallèlement à l'axe transversal Y entre deux bordures longitudinales 81, 82 qui délimitent la dent 71, 72, est décroissante depuis la première partie 41 vers la deuxième partie 42. Chaque dent 71, 72 est par exemple de conformation triangulaire.

La première partie 41 et la troisième partie 43 sont séparées l'une de l'autre par un deuxième col 52. Autrement dit, le deuxième col 52 est la zone du canal 18 où la largeur du canal 18 passe de la première largeur L1 à la troisième largeur L3. La troisième partie 43 est une zone dans laquelle les bords longitudinaux 61, 62 sont susceptibles de comprendre un ou plusieurs chanfreins 24 de telle sorte que la troisième largeur L3 est préférentiellement décroissante depuis la première ouverture 23 jusqu'au deuxième col 52, la décroissance étant indifféremment régulière et continue ou bien par paliers. Selon, l'une et l'autre de ces variantes, la troisième partie 43 est globalement agencée en un entonnoir.

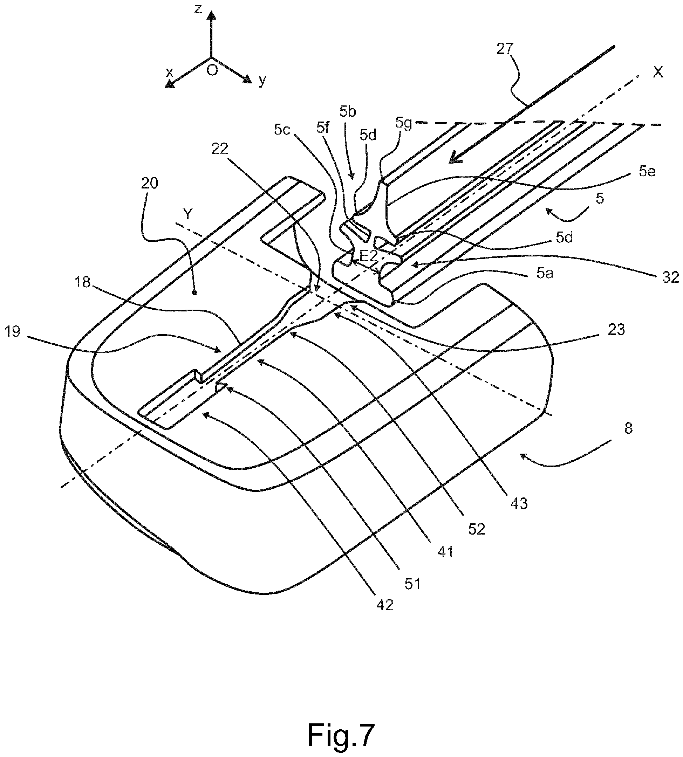

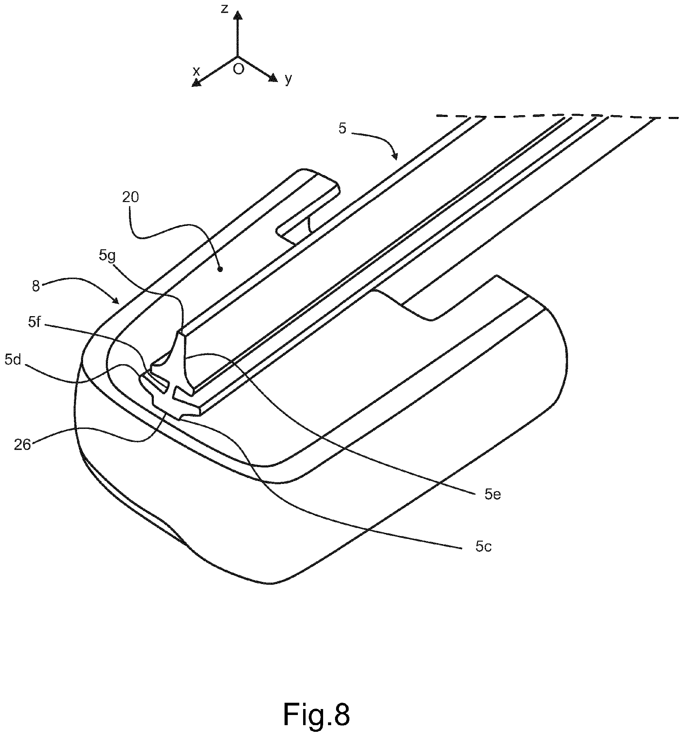

Sur les figures 7 et 8, sont illustrées deux étapes successives d'un procédé d'accrochage de la lame racleuse 5 à l'embout d'extrémité 8. Sur la figure 7, le corps intermédiaire 5c de la lame racleuse 5 est placé en vis-à-vis de la première ouverture 23 et le talon 5a de la lame racleuse 5 est placé en vis-à-vis du deuxième logement 22. A partir d'un mouvement en translation, illustré par une flèche référencée 27, de la lame racleuse 5 le long de l'axe longitudinal X, la deuxième extrémité longitudinale 32 de la lame racleuse 5 traverse le passage 12 jusqu'à ce que le talon 5a pénètre à l'intérieur du deuxième logement 22 et que le corps intermédiaire 5c pénètre à l'intérieur de la troisième partie 43 du canal 18.

L'agencement en entonnoir de la troisième partie 43 facilite une insertion du corps intermédiaire 5c à l'intérieur du canal 18, et consécutivement facilite une introduction du talon 5a à l'intérieur du deuxième logement 22. Puis, le corps intermédiaire 5c de la lame racleuse 5 circule à l'intérieur de la première partie 41 en étant latéralement comprimé. Le corps intermédiaire 5c est d'une largeur E2 qui est supérieure à la première largeur L1, la largeur E2 du corps intermédiaire 5c étant mesurée parallèlement à l'axe transversal Y entre deux bords latéraux du corps intermédiaire 5c avant que la lame racleuse 5 ne soit accrochée à l'embout d'extrémité 8. Dans un autre référentiel, la largeur E2 du corps intermédiaire 5c peut être mesurée hors de la première partie 41 du canal 18, par exemple dans la troisième partie 43 ou en dehors de l'embout d'extrémité 8.

On comprendra ici que l'insertion du corps intermédiaire 5c à l'intérieur de la première partie 41 est faite en force à partir d'une déformation élastique du corps intermédiaire 5c. Ces dispositions visent à conforter une liaison mécanique de l'embout d'extrémité 8 avec la lame racleuse 5. Puis, le corps intermédiaire 5c franchit le premier col 51 dont l'agencement en restriction de largeur génère un pincement supplémentaire du corps intermédiaire 5c à l'intérieur du canal 18 au niveau du premier col 51. Ces dispositions visent aussi à améliorer la liaison mécanique entre l'embout d'extrémité et la lame racleuse 5, en limitant tout mouvement de translation en un sens opposé à celui illustré par la flèche 27.

Puis, le corps intermédiaire 5c, est introduit à l'intérieur de la deuxième partie 42 à l'intérieur de laquelle le corps intermédiaire 5c se déploie et s'étale latéralement en retrouvant sa largeur initiale. Enfin, la deuxième extrémité 32 de la lame racleuse 5 vient en contact contre la butée 26, limitant ainsi le mouvement de translation selon la flèche 27. Ainsi positionné dans la deuxième partie 42 du canal 18, le corps intermédiaire 5c tend à reprendre sa forme initiale et les dents 71, 72 s'ancrent à l'intérieur du corps intermédiaire 5c de telle sorte que ce dernier, et consécutivement la lame racleuse 5, est solidement maintenu en place, tel qu'illustré sur la figure 8. Ces dispositions optimisent une liaison mécanique entre l'embout d'extrémité 8 et la lame racleuse 5.

On comprend de ce qui précède que seule la lame racleuse 5 se déforme lors du procédé d'accrochage de cette lame racleuse 5 à l'embout d'extrémité 8. En d'autres termes, l'embout d'extrémité 8 est réalisé en un matériau plus rigide que le matériau dans lequel est réalisée la lame racleuse 5.

On notera à ce stade de la description qu'une longueur du canal 18, mesurée parallèlement à l'axe longitudinal X entre le premier col 51 et le deuxième col 52, c'est-à-dire formant la première partie 41, est comprise entre 7, 5 mm et 11.5 mm à +/- 10% près, pour que l'objectif d'adhérence et d'accrochage de l'embout d'extrémité 8 avec la lame racleuse 5 soit optimisé. Une telle longueur offre l'adhérence nécessaire entre le moyen d'accrochage 19 de l'embout d'extrémité 8 et la lame racleuse 5. Une longueur optimisée de cette première partie 41 est égale à 8 mm.

La description qui précède explique clairement comment l'invention permet d'atteindre les objectifs qu'elle s'est fixé et notamment de proposer un ensemble constitué d'un embout d'extrémité et d'une lame racleuse d'un balai d'essuyage pour véhicule automobile reliés mécaniquement l'un à l'autre par un moyen issue de matière avec l'embout d'extrémité, c'est-à-dire sans ajout d'une agrafe supplémentaire.

Bien entendu, diverses modifications peuvent être apportées par l'homme du métier à l'ensemble selon l'invention qui vient d'être décrit à titre d'exemple non limitatif, dès lors que l'on met en œuvre une forme de l'embout d'extrémité moulée simultanément avec le reste de l'embout d'extrémité.

## Revendications

1. Ensemble (5, 8) formé d'un embout d'extrémité (8) et d'une lame racleuse (5) constitutifs d'un balai d'essuyage (1), la lame racleuse (5) comprenant au moins un talon (5a) et une zone de frottement (5g), la zone de frottement (5g) étant apte à venir en contact d'une surface à essuyer, l'embout d'extrémité (8) comprenant un premier logement (21) qui est configuré pour recevoir une première extrémité (31) d'un support flexible (6) du balai d'essuyage (1) et un deuxième logement (22) dans lequel s'étend le talon (5a) de la lame racleuse (5), les deux logements (21, 22) étant superposés dans un plan passant par le talon (5a) et par la zone de frottement (5g), l'embout d'extrémité (8) comprenant un moyen d'accrochage (19) à la lame racleuse (5) venu de matière avec l'embout d'extrémité (8), ensemble dans lequel le moyen d'accrochage (19) comprend un canal (18) ménagé à travers une paroi périphérique (20) de l'embout d'extrémité (8), le canal (18) comprenant une première partie (41) d'une première largeur (L1) et une deuxième partie (42) d'une deuxième largeur (L2), la deuxième largeur (42) étant supérieure à la première largeur (L1), ensemble dans lequel seule la lame racleuse (5) est apte à se déformer, **caractérisé en ce que** une largeur (E2) d'un corps intermédiaire (5c) de la lame racleuse (5) disposé entre le talon (5a) et la zone de frottement (5g), mesurée hors de la première partie (41) du canal (18), est supérieure à la première largeur (L1) de la première partie (41) du canal (18).

2. Ensemble (5, 8) selon la revendication 1, dans lequel le canal (18) comprend une troisième partie (43) d'une troisième largeur (L3) qui est supérieure à la première largeur (L1).

3. Ensemble (5, 8) selon la revendication précédente, dans lequel la troisième largeur (L3) est décroissante entre une ouverture (23) du canal (18) et un deuxième col (52) qui est interposé entre la première partie (41) et la troisième partie (43).

4. Ensemble (5, 8) selon l'une quelconque des revendications précédentes, dans lequel un premier col (51) d'une quatrième largeur (L4) est interposé entre la première partie (41) et la deuxième partie (42), la quatrième largeur (L4) étant inférieure à la première largeur (L1).

5. Ensemble (5, 8) selon la revendication précédente, dans lequel le premier col (51) comprend au moins une dent (71, 72).

6. Ensemble (5, 8) selon l'une quelconque des revendications 4 ou 5, dans lequel le premier col (51) comprend un unique couple de dents (71, 72).

7. Ensemble (5, 8) selon la revendication précédente, dans lequel chaque dent (71, 72) s'étend vers la deuxième partie (42) du canal (18).

8. Ensemble (5, 8) selon l'une quelconque des revendications précédentes, dans lequel l'embout d'extrémité (8) est réalisé en un matériau plus rigide que le matériau dans lequel est réalisée la lame racleuse (5).

9. Ensemble (5, 8) selon l'une quelconque des revendications précédentes, dans lequel la paroi périphérique (20) de l'embout d'extrémité (8) dans laquelle est ménagé le canal (18) présente une surface plane sur une dimension au moins équivalente à une largeur du premier logement (21) de l'embout d'extrémité (8) destiné à recevoir la première extrémité (31) du support flexible (6).

10. Balai d'essuyage (1) comprenant un ensemble (5, 8) selon l'une quelconque des revendications précédentes et un support flexible (6) dont la première extrémité (31) est logée à l'intérieur du premier logement (21).

11. Balai d'essuyage (1) selon la revendication précédente, dans lequel le support flexible (6) comprend une unique vertèbre.

12. Système d'essuyage (3) comprenant un bras d'entraînement (2) pourvu d'un dispositif de connexion (10) avec un balai d'essuyage (1) selon l'une des revendications 10 ou 11.

## Patentansprüche

1. Baugruppe (5, 8), die aus einer Endkappe (8) und einem Wischergummi (5) gebildet ist, aus denen ein Wischerblatt (1) besteht, wobei das Wischergummi (5) mindestens einen Ansatz (5a) und eine Reibzone (5g) umfasst, wobei die Reibzone (5g) dazu geeignet ist, mit einer zu wischenden Oberfläche in Kontakt zu kommen, wobei die Endkappe (8) eine erste Aufnahme (21), die zum Aufnehmen eines ersten Endes (31) einer flexiblen Stütze (6) des Wischerblatts (1) ausgestaltet ist, und eine zweite Aufnahme (22) umfasst, in der sich der Ansatz (5a) des Wischergummis (5) erstreckt, wobei die beiden Aufnahmen (21, 22) in einer Ebene überlagert sind, die durch den Ansatz (5a) und durch die Reibzone (5g) geht, wobei die Endkappe (8) ein Mittel (19) zum Einhaken an dem Wischergummi (5) umfasst, das mit der Endkappe (8) materialhomogen ist, wobei bei der Baugruppe das Einhakmittel (19) einen Kanal (18) umfasst, der durch eine Umfangswand (20) der Endkappe (8) ausgeführt ist, wobei der Kanal (18) einen ersten Teil (41) mit einer ersten Breite (L1) und einen zweiten Teil (42) mit einer zweiten Breite (L2) umfasst, wobei die zweite Breite (42) größer als die erste Breite (L1) ist, wobei bei der Baugruppe nur das Wischergummi (5) geeignet ist, sich zu verformen, **dadurch gekennzeichnet, dass** eine außerhalb des ersten Teils (41) des Kanals (18) gemessene Breite (E2) eines zwischen dem Ansatz (5a) und der Reibzone (5g) angeordneten Zwischenkörpers (5c) des Wischergummis (5) größer als die erste Breite (L1) des ersten Teils (41) des Kanals (18) ist.

2. Baugruppe (5, 8) nach Anspruch 1, wobei der Kanal (18) einen dritten Teil (43) mit einer dritten Breite (L3) umfasst, die größer als die erste Breite (L1) ist.

3. Baugruppe (5, 8) nach dem vorhergehenden Anspruch, wobei die dritte Breite (L3) zwischen einer Öffnung (23) des Kanals (18) und einem zweiten Hals (52), der zwischen dem ersten Teil (41) und dem dritten Teil (43) liegt, abnimmt.

4. Baugruppe (5, 8) nach einem der vorhergehenden Ansprüche, wobei ein erster Hals (51) mit einer vierten Breite (L4) zwischen dem ersten Teil (41) und dem zweiten Teil (42) liegt, wobei die vierte Breite (L4) kleiner als die erste Breite (L1) ist.

5. Baugruppe (5, 8) nach dem vorhergehenden Anspruch, wobei der erste Hals (51) mindestens eine Zinke (71, 72) umfasst.

6. Baugruppe (5, 8) nach einem der Ansprüche 4 oder 5, wobei der erste Hals (51) ein einziges Zinkenpaar (71, 72) umfasst.

7. Baugruppe (5, 8) nach dem vorhergehenden Anspruch, wobei sich jede Zinke (71, 72) zu dem zweiten Teil (42) des Kanals (18) hin erstreckt.

8. Baugruppe (5, 8) nach einem der vorhergehenden Ansprüche, wobei die Endkappe (8) aus einem Material hergestellt ist, das starrer als das Material ist, aus dem das Wischergummi (5) hergestellt ist.

9. Baugruppe (5, 8) nach einem der vorhergehenden Ansprüche, wobei die Umfangswand (20) der Endkappe (8), in der der Kanal (18) ausgeführt ist, eine ebene Fläche über eine Abmessung aufweist, die mindestens einer Breite der ersten Aufnahme (21) der Endkappe (8) entspricht, die zur Aufnahme des ersten Endes (31) der flexiblen Stütze (6) bestimmt ist.

10. Wischerblatt (1), umfassend eine Baugruppe (5, 8) nach einem der vorhergehenden Ansprüche und eine flexible Stütze (6), deren erstes Ende (31) im Inneren der ersten Aufnahme (21) aufgenommen ist.

11. Wischerblatt (1) nach dem vorhergehenden Anspruch, wobei die flexible Stütze (6) eine einzige Leiste umfasst.

12. Wischsystem (3), umfassend einen Antriebsarm (2), der mit einer Vorrichtung (10) zur Verbindung mit einem Wischerblatt (1) nach einem der Ansprüche 10 oder 11 versehen ist.

## Claims

1. . An assembly (5, 8) formed of an end-piece (8) and a wiper rubber (5) constituting a wiper blade (1), the wiper rubber (5) comprising at least one heel (5a) and a friction zone (5g), the friction zone (5g) being capable of coming into contact with a surface to be wiped, the end-piece (8) comprising a first receiver (21) which is configured to receive a first end (31) of a flexible support (6) of the wiper blade (1) and a second receiver (22) into which the heel (5a) of the wiper rubber (5) extends, the two receivers (21, 22) being superposed in a plane passing through the heel (5a) and through the friction zone (5g), the end-piece (8) comprising a means of attachment (19) to the wiper rubber (5) integrally formed with the end-piece (8), assembly wherein the means of attachment (19) comprises a channel (18) formed through a peripheral wall (20) of the end-piece, the channel (18) comprising a first portion (41) of a first width (L1) and a second portion (42) of a second width (L2), the second width (42) being greater than the first width (L1), assembly wherein only the wiper rubber (5) is capable of deforming, caracterised in that a width (E2) of an intermediate body (5c) of the wiper rubber (5) arranged between the heel (5a) and the friction zone (5g), measured outside the first portion (41) of the channel (18), is greater than the first width (L1) of the first portion (41) of the channel (18).

2. . The assembly (5, 8) according to claim 1, wherein the channel (18) comprises a third portion (43) of a third width (L3) which is greater than the first width (L1).

3. . The assembly (5, 8) according to the preceding claim, wherein the third width (L3) decreases between an opening (23) of the channel (18) and a second neck (52) which is interposed between the first portion (41) and the third portion (43).

4. . The assembly (5, 8) according one of the preceding claims, wherein a first neck (51) of a fourth width (L4) is interposed between the first portion (41) and the second portion (42), the fourth width (L4) being smaller than the first width (L1).

5. . The assembly (5, 8) according to the preceding claim, wherein the first neck (51) comprises at least one tooth (71, 72).

6. . The assembly (5, 8) according one of the preceding claims 4 or 5, wherein the first neck (51) comprises a single pair of teeth (71, 72).

7. . The assembly (5, 8) according to the preceding claim, wherein each tooth (71, 72) extends towards the second portion (42) of the channel (18).

8. . The assembly (5, 8) according one of the preceding claims, wherein the end-piece (8) is made of a material which is more rigid than the material of which the wiper rubber (5) is made.

9. . The assembly (5, 8) according one of the preceding claims, wherein the peripheral wall (20) of the end-piece (8) in which the channel (18) is formed has a planar surface over a dimension at least equivalent to a width of the first receiver (21) of the end-piece (8) which is to receive the first end (31) of the flexible support (6).

10. . A wiper blade comprising an assembly (5, 8) one of the preceding claims and a flexible support (6), the first end (31) of which is received inside the first receiver (21).

11. . The wiper blade according to the preceding claim, wherein the flexible support (6) comprises a single vertebra.

12. . A wiping system comprising a driving arm (2) provided with a connection device (10) for connection to a wiper blade (1) according one of the claims 10 or 11.
